# FASCICULE DE BREVET EUROPEEN

(11) **EP 1 093 900 B1**
(45) Date de publication et mention de la délivrance du brevet: **09.07.2003**
(21) Numéro de dépôt: 00400937.9
(22) Date de dépôt: 05.04.2000
(51) Int. Cl.: B29B 15/10, B29C 70/50

(54) **Procédé de fabrication d'un ruban composite forme de fibres de renforcement et de matière thermoplastique.**
Verfahren und Vorrichtung zur Herstellung eines Verbundbandes geformt aus Verstärkungsfasern und thermoplastischem Material
Method and apparatus for manufacturing a composite tape shaped from reinforcing fibres and thermoplastic material

(30) Priorité: 20.10.1999 FR 9913067
(43) Date de publication de la demande: 25.04.2001
(73) Titulaire: Saint-Gobain Vetrotex France S.A., 73000 Chambéry (FR)
(72) Inventeur: Debalme, Jean-Paul, 73000 Chambery (FR); Voiron, Jacques, 73160 St Jean de Couz (FR); Cividino, Alexandre, 73000 Chambery (FR)
(74) Mandataire: Le Cam, Stéphane Georges Elie

(56) Documents cités:
- WO-A-97/26397
- US-A- 5 011 523
- JACOB A: "Automation sets filament winding on the right path" REINFORCED PLASTICS,US,ELSEVIER ADVANCED TECHNOLOGY, NEW YORK, NY, vol. 42, no. 8, 1 septembre 1998 (1998-09-01), pages 48-50, XP004138514 ISSN: 0034-3617

## Description

L'invention concerne la fabrication d'un ruban composite à base de fibres de renforcement et de matière organique thermoplastique.

Les matériaux composites à base de matière thermoplastique et de fibres de renforcement sont largement utilisés dans le renforcement d'articles de tous types, notamment pour la fabrication de tuyaux composites destinés à véhiculer des gaz ou des liquides sous pression.

On connaît d'après la demande de brevet FR 2 516 441 un procédé de fabrication de profilés minces comprenant des fibres de verre continues unidirectionnelles noyées dans une résine thermoplastique.

Les étapes du procédé pour obtenir de tels profilés sont les suivantes :
- déroulage des fils de verre depuis des bobines pour former une nappe de fils ;
- séparation des fibres des fils pour les décoller les unes des autres en raison de l'ensimage les revêtant ;
- trempage de la nappe de fibres de verre dans un bain aqueux de matière thermoplastique ou bien dans un lit fluidisé de poudre de matière thermoplastique ;
- chauffage de la nappe pour obtenir selon le mode de trempage, l'évaporation de l'eau ou bien la fusion de la poudre;
- conformation à chaud de la nappe de fibres enrobée de résine de manière à réaliser le profil désiré.

Un inconvénient dans ce procédé est de devoir introduire, pour une imprégnation homogène des fibres par la matière thermoplastique, l'étape de séparation des fibres. Celle-ci nécessite un dispositif spécifique utilisant plusieurs rouleaux, dont le nombre et la disposition pour assurer l'angle d'enroulement adéquat de la nappe sur ceux-ci sont déterminés par le degré de collage des fibres entre elles.

De plus, il est parfois nécessaire lorsque le degré de collage est trop important de prévoir des moyens de chauffage complémentaires aux rouleaux.

Par conséquent, l'éventualité de ne pas séparer parfaitement toutes les fibres pour permettre ensuite un enrobage de celles-ci par de la matière thermoplastique existe.

Par ailleurs, le procédé utilise pour l'imprégnation un bain de matière thermoplastique qui doit être maintenu à un niveau constant et dont la dispersion est en circulation constante pour assurer une imprégnation aussi constante que possible. Or les moyens de mise en oeuvre de ce bain sont importants et lourds à gérer sur une chaîne de fabrication; il s'agit d'éléments tels qu'une pompe d'envoi de liquide, un déversoir pour l'établissement d'un niveau constant, un bac de stockage pour le trop plein, un dispositif d'agitation pour l'homogénéité du contenu du bain, ces éléments impliquant un nettoyage régulier.

Dans la variante du dispositif d'imprégnation pour l'emploi d'un lit fluidisé, des moyens spécifiques sont aussi nécessaires, notamment un système vibrant monté sur ressorts pour doser la quantité de poudre emportée par les fibres.

Enfin, le dispositif de conformation est constitué d'un rouleau inférieur pourvu d'une gorge dans laquelle défile la nappe et d'un rouleau supérieur servant à presser la nappe. Ainsi les divers calibres attendus du profilé impliquent l'inconvénient d'avoir à disposition plusieurs rouleaux portant respectivement des gorges de différentes dimensions.

Par conséquent, ce procédé, lent de mise en oeuvre, s'avère coûteux et peu performant.

La présente invention a donc pour but de fournir un procédé de fabrication d'un matériau composite à base de fibres de renforcement et de matière organique thermoplastique qui soit de mise en oeuvre aisée et rapide, ainsi qu'économique sur un plan industriel.

Plus particulièrement, l'invention propose grâce à ce procédé un produit se présentant sous la forme d'un ruban solide et souple, d'épaisseur constante inférieure à 0,2 mm, et constitué de fils continus de renforcement agencés de manière parallèle et contiguë les uns contre les autres et solidarisés entre eux par de la matière thermoplastique pour réaliser une continuité transversale sans présence d'air, le ruban présentant un aspect surfacique lisse et comprenant un taux de vide inférieur à 0,2%.

Selon l'invention, le procédé de fabrication du ruban est caractérisé en ce que :
- on entraîne et on rassemble de manière parallèle des fils à base de matière thermoplastique et de fibres de renforcement, sous la forme d'une nappe;
- on fait pénétrer ladite nappe dans une zone où elle est chauffée à une température atteignant au moins celle de fusion de la matière thermoplastique sans atteindre la température de ramolissement des fibres de renforcement;
- on fait passer la nappe dans un dispositif tournant d'imprégnation, tout en maintenant sa température à une température de malléabilité de la matière thermoplastique, pour répartir de manière homogène la matière thermoplastique fondue et garantir la totale imprégnation des fibres de renforcement par celle-ci;
- on introduit la nappe dans un dispositif de conformation et de centrage, tout en maintenant sa température à une température de malléabilité de la matière thermoplastique, de manière à obtenir un ruban constitué par le rapprochement en contigu des fils formant une continuité transversale;
- on refroidit le ruban pour solidariser les fils entre eux en figeant la matière thermoplastique et on fixe ses caractéristiques dimensionnelles et son aspect pour délivrer ledit ruban composite de l'invention.

Selon une caractéristique, les fils qu'on rassemble consistent en des filaments continus de verre et de matière thermoplastique co-mêlés entre eux.

Selon une autre caractéristique, le procédé consiste à dévider des bobines d'un fil continu de filaments de renforcement et de matière thermoplastique, et lors du rassemblement des fils sous forme de nappe, à réguler la tension des fils.

Avantageusement, les fils sont débarrassés de toute électricité statique avant le passage de la nappe dans la zone de chauffage.

Selon une autre caractéristique, on introduit la nappe dans une zone de chauffage supplémentaire après son passage dans le dispositif tournant d'imprégnation.

Quant au dispositif de mise en oeuvre du procédé, il est caractérisé en ce qu'il comprend:
- des moyens pour entraîner et des moyens pour rassembler sous forme de nappe les fils continus constitués de filaments de renforcement et de matière thermoplastique;
- des moyens pour chauffer ladite nappe à une température atteignant au moins celle de fusion de la matière thermoplastique mais pas celle de ramolissement des filaments de renforcement;
- un dispositif tournant d'imprégnation de la nappe chauffée de manière à répartir de manière homogène la matière thermoplastique fondue et à garantir la totale imprégnation des filaments de renforcement par celle-ci;
- un dispositif de conformation et de centrage de la nappe de manière à la transformer en un ruban;
- une calandre de refroidissement du ruban permettant de figer la matière thermoplastique et de solidariser les fils entre eux et former le ruban définitif.

Selon une caractéristique, le dispositif comprend des moyens supplémentaires de chauffage de manière à garder malléable la matière thermoplastique de la nappe après le passage de celle-ci dans le dispositif d'imprégnation.

Selon une autre caractéristique, les moyens de rassemblement du dispositif consistent en un peigne dont les dents permettent un alignement parallèle des fils selon des espaces réguliers.

Selon une autre caractéristique, le dispositif d'imprégnation comporte trois cylindres chauffants et tournants qui sont disposés en triangle et entre lesquels défile la nappe, la hauteur de séparation des cylindres étant adaptée pour établir une pression appropriée sur la surface de la nappe.

Avantageusement, chaque cylindre comporte une lame pour racler la matière thermoplastique fondue déposée sur le cylindre après passage de la nappe.

Selon une autre caractéristique, le dispositif de conformation et de centrage comporte un galet inférieur et un galet supérieur décalés l'un au-dessus de l'autre et tournant en sens opposés, ie galet supérieur étant de forme hyperboloïde, la nappe étant concentrée autour de l'axe central de défilement lors de son passage entre les deux galets pour délivrer un ruban présentant une association contiguë des fils les uns contre les autres.

Avantageusement, la calandre de refroidissement du dispositif est constituée de deux cylindres tournants de refroidissement qui sont disposés l'un au-dessus de l'autre et sont dépourvus de bords de guidage, la calandre conférant ainsi sa forme définitive au ruban.

De préférence, la calandre de refroidissement comporte en aval des cylindres un bain dans lequel est immergé le ruban en défilement.

D'autres avantages et caractéristiques vont à présent être décrits en regard des dessins sur lesquels:
- la figure 1 est une vue schématique en élévation du dispositif de fabrication d'un ruban selon l'invention;
- les figures 2 à 5 sont des vues de profil de certaines parties du dispositif de la figure 1, respectivement, d'un dispositif de régulation de tension des fils, du dispositif tournant d'imprégnation, du dispositif de conformation et de centrage et de la calandre de refroidissement.

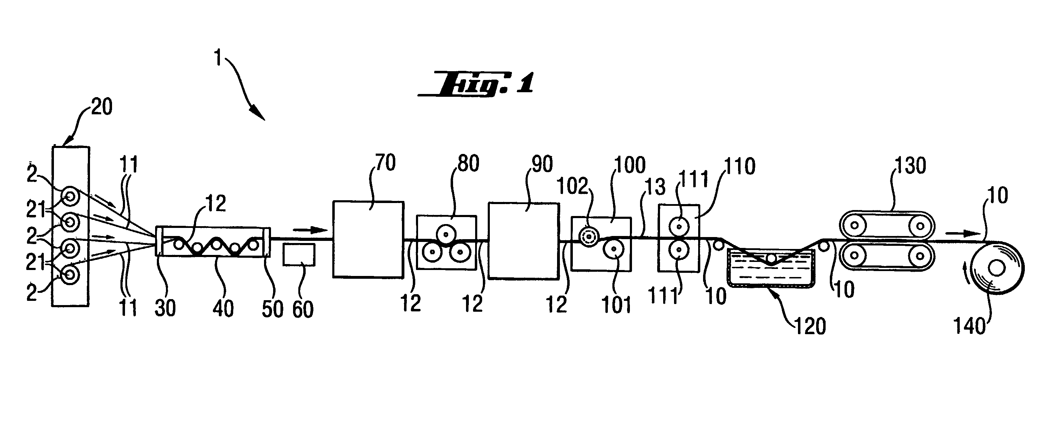

Le dispositif 1 visible à la figure 1 permet la fabrication d'un ruban 10 conforme à l'invention qui présente une épaisseur constante et est constitué d'une multiplicité de fils 11 parallèles et rassemblés de manière contiguë les uns contre les autres. Chaque fil, commercialisé par la société VETROTEX sous la dénomination commerciale TWINTEX® et fabriqué selon le procédé décrit dans le brevet EP 0 599 695, est constitué par des filaments de verre et des filaments d'une matière organique thermoplastique, de type polyoléfine ou polyester, intimement mêlés entre eux.

Le dispositif de fabrication 1 comprend, sous forme d'une ligne et d'amont en aval, un cantre 20 muni de plusieurs bobines 2 d'enroulement de fil 11, une plaque à oeillets 30, un dispositif de régulation de tension des fils 40, un peigne 50, un dispositif anti-électricité statique 60, un premier four 70, un dispositif d'imprégnation 80, un second four 90, un dispositif de lissage et de centrage 100, une calandre 110, un bac de refroidissement 120 et un banc de tirage à chenilles 130.

Le cantre 20 est du type à déroulement . Il a pour but de dévider le fil 11 de chaque bobine 2. Il se compose d'un châssis muni d'axes rotatifs horizontaux 21 qui supportent chacun une bobine 2.

En variante, on peut utiliser un cantre à dévidage, mais celui-ci induit une torsion sur le fil qui n'est pas constante allant de un tour pour 50 cm jusqu'à un tour pour 1 m. Or cette torsion a l'inconvénient de limiter l'épaisseur minimale du ruban fini, en ne pouvant descendre en-dessous de 0,3 mm pour des bobines de fil de 982 tex.

En outre, cette torsion favorise l'emmêlement des fils en cours de défilement sur la chaîne de fabrication du ruban ce qui provoque des noeuds et/ou des fils 11 non parallèles et non tendus dans le ruban une fois formé, impliquant une chute des propriétés mécaniques du ruban en tant que produit fini.

On préférera par conséquent l'utilisation d'un cantre à déroulement, pour notamment réaliser une fine épaisseur de ruban (inférieure à 0,2 mm). Il s'avère cependant nécessaire dans ce cas de prévoir un dispositif de régulation, référencé 40 sur les figures 1 et 2.

Ce dispositif 40 permet d'ajuster le niveau de tension global de la nappe de fils.

La plaque à oeillets 30, visible aussi à la figure 2, est située dans un plan vertical et parallèle aux axes rotatifs 21 du cantre. Elle permet de regrouper les fils 11, qui traversent chacun un oeillet 31 pour être guidés vers le dispositif de régulation de tension 40 sous un angle adapté à la tension désirée. Les oeillets 31 sont de manière connue en matériau céramique pour éviter d'endommager les fils lors de leur passage au travers de ceux-ci.

Le dispositif de régulation de tension 40 qui est illustré à la figure 2 est associé à la plaque à oeillets 30. Il comporte une série de barreaux cylindriques 41 disposés en quinconce les uns aux dessus des autres et, sur et sous lesquels cheminent les fils 11 en provenance de la plaque à oeillets 30 de manière à dessiner des sinusoïdes identiques dont l'amplitude influe sur la tension des fils. Les barreaux sont réglables en hauteur afin de pouvoir modifier l'amplitude des sinusoïdes qui, par son augmentation, impose une tension supplémentaire aux fils.

Les barreaux sont avantageusement en laiton ou en matériau céramique pour limiter les phénomènes d'électricité statique induits par le frottement des fils.

A la sortie du dispositif 40 est disposé un peigne 50 dont les dents 51 regroupent et alignent parallèlement les fils 11 selon un espace régulier pour obtenir une nappe 12 à la manière de faisceaux de fils.

Entre le peigne 50 et l'entrée du premier four 70 est implanté un dispositif électrique 60 servant à annihiler toute électricité statique dont pourraient être chargés les fils 11 de façon à éviter le foisonnement desdits fils qui pourrait sinon engendrer leur dégradation dans le four 70.

Le premier four 70 comme le second four 90 fonctionnent par convection à air chaud. Il pourrait tout aussi bien s'agir de fours à infra-rouge.

Le chauffage de la nappe 12 par son passage dans le premier four 70 s'effectue à une température telle qu'à sa sortie du four la nappe ait une température suffisante pour atteindre la température de fusion du thermoplastique des fils 11 pour que ce dernier, fondu, se colle et se noie dans les filaments de verre de l'ensemble de la nappe 12.

Entre et à l'extérieur des fours 70 et 90 est situé un dispositif tournant d'imprégnation 80 qui aplatit la nappe 12 de façon à chasser l'air contenu entre les fils, à répartir de manière homogène sur la largeur de la nappe le thermoplastique fondu, et à garantir la totale imprégnation des filaments de verre par le thermoplastique.

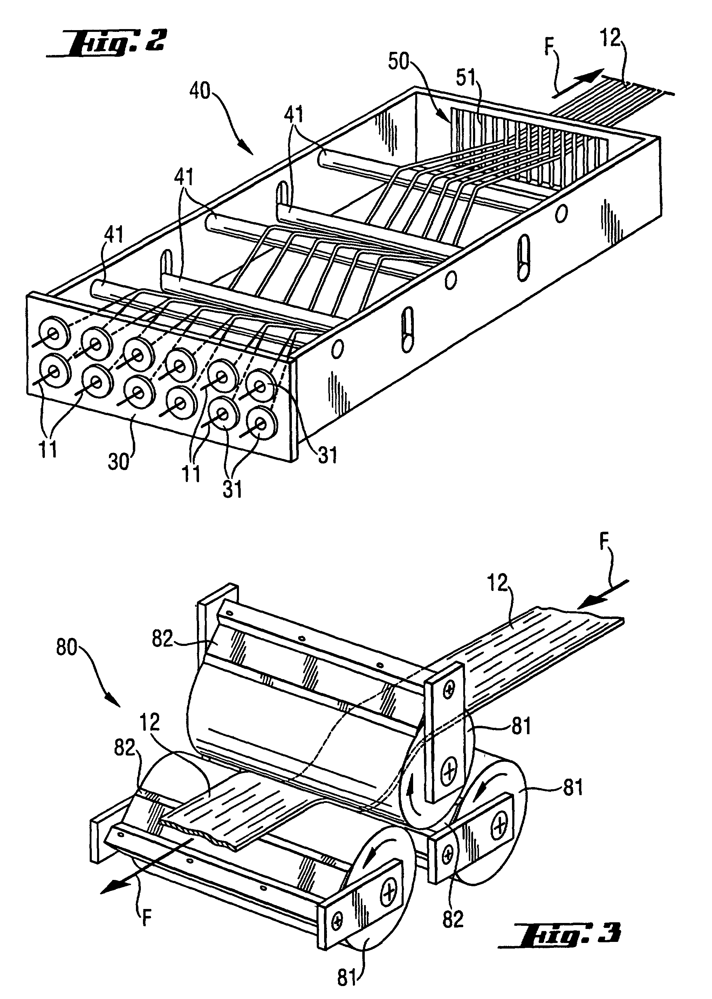

Le dispositif tournant d'imprégnation 80, visible à la figure 3, est constitué de trois cylindres 81 parallèles entre eux et disposés en triangle de façon à présenter deux cylindres inférieurs et un cylindre supérieur. Les cylindres sont chauffants et atteignent une température suffisante pour maintenir le thermoplastique de la nappe dans un état malléable.

Les cylindres 81 sont rotatifs, ceux inférieurs tournant dans le sens positif de direction de défilement F de la nappe 12, tandis que celui supérieur tourne dans le sens opposé, les vitesses de rotation étant identiques et correspondant à celle de défilement de la nappe.

Le cylindre supérieur est réglable en hauteur pour établir une pression suffisante sur la nappe 12 de façon à assurer l'imprégnation du verre par le thermoplastique.

Les cylindres 81 étant en contact avec la nappe présentent rapidement sur leur surface le dépôt d'un film de matière thermoplastique. Avantageusement, lesdits cylindres comportent chacun une lame 82 faisant office de racle par rapport à leur surface et dont le rôle est tout à la fois d'éviter la formation d'enroulements parasites des filaments de verre et d'aider à la répartition homogène du thermoplastique fondu sur la longueur du ruban. Ainsi en cas de surplus d'épaisseur du film sur chaque cylindre, ce surplus permet de compléter l'enrobage des filaments de verre qui seraient éventuellement insuffisamment revêtus.

Les lames 82 sont réglables en inclinaison de manière à optimiser leur efficacité.

En variante, dans un même but de régulation de la répartition de la matière thermoplastique, au lieu d'utiliser les lames 82, les trois cylindres sont entraînés à une vitesse de rotation légèrement inférieure à celle de défilement de la nappe. Cette solution nécessite non seulement la motorisation des cylindres 82 mais aussi la mise en place d'un mécanisme de contrôle de vitesse.

Le second four 90 présente une température de consigne telle que le thermoplastique de la nappe en défilement reste malléable.

A noter qu'il serait possible d'imaginer un four unique dans lequel serait logé le dispositif d'imprégnation 80 apte à résister à la température du four.

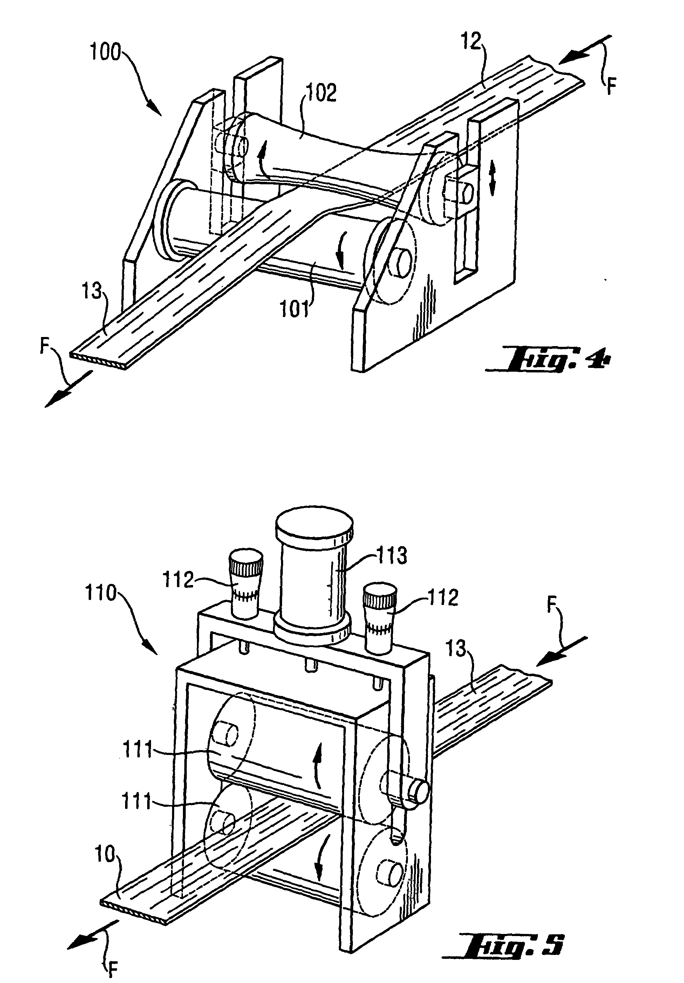

A la sortie du second four est placé un dispositif de conformation et de centrage 100 qui comprend, tel qu'illustré à la figure 4, un galet inférieur cylindrique 101 et un galet supérieur hyperboloïde 102 légèrement décalé en amont par rapport à la verticale du galet inférieur, tous deux tournants et chauffants pour maintenir à la température de malléabilité le thermoplastique de la nappe 12.

Le dispositif 100 a pour but de transformer la nappe 12 en un ruban 13 d'épaisseur constante constitué par le rapprochement en contigu des fils 11 pour réaliser une continuité transversale dudit ruban. Ainsi, le dispositif 100 concentre la nappe autour de l'axe central de la ligne pour diminuer sa largeur qui avait été augmentée lors de son passage dans le dispositif d'imprégnation 80, et la recentre par rapport à l'axe central de la ligne de fabrication pour guider le ruban convenablement en aval vers la calandre 110.

Le rassemblement et le guidage vers le centre est obtenu par la forme hyperboloïde du galet supérieur 102 qui, par son réglage en hauteur, permet par ailleurs d'appliquer une légère pression sur la surface supérieure de la nappe pour la concentrer.

La rotation en sens opposé des galets 101 et 102 évite d'une part, l'essorage de la matière thermoplastique, et d'autre part, son accumulation qui pourrait nuire à la régularité de sa répartition et par conséquent, à l'épaisseur du ruban.

Une calandre 110, visible à la figure 5, est située en aval du dispositif 100 dans le but de donner au ruban 13 ses caractéristiques dimensionnelles et son aspect définitifs afin de disposer d'un ruban fini 10. La calandre 110 règle l'épaisseur définitive du ruban et le refroidit simultanément pour figer la matière thermoplastique en lui conférant un aspect surfacique lisse.

La calandre est constituée de deux cylindres 111 agencés l'un au dessus de l'autre et tournant en sens contraire, entraînés en rotation par le défilement du ruban.

Les deux cylindres 111 sont refroidis par une circulation interne d'eau de manière à figer le thermoplastique et solidariser les fils entre eux.

L'épaisseur du ruban 10 est contrôlée de façon précise par l'écartement imposé entre les deux cylindres à l'aide de butées réglables 112. Un vérin pneumatique 113 réalise la pression à appliquer sur la surface du ruban pour niveler toutes les variations d'épaisseur qui pourraient survenir. Il joue ainsi un rôle de verrouillage du positionnement des butées réglables 112.

On souligne que la calandre 110 est dépourvue de bords de guidage qui, dans les dispositifs de calandrage connus, permettent d'imposer une largeur à l'élément à calandrer. En effet, dans l'invention, la largeur est définie par le nombre de fils 11 mis en oeuvre pour la fabrication du ruban. L'absence de bords présente l'avantage de ne pas cisailler les fils.

Le refroidissement final du ruban est réalisé au moyen du bac d'eau 120 situé après la calandre 110 et dans lequel est immergé le ruban 10 lors de son défilement.

Postérieurement à ce bac est implanté un banc de tirage à chenilles 130 qui constitue de manière connue un moyen d'entraînement des fils et du ruban, exerçant un effort de traction tout au long de la ligne. Il impose la vitesse de dévidage et de défilement de la nappe puis du ruban.

Enfin, le dispositif 1 de fabrication peut comprendre en terminaison de ligne un bobinoir 140 destiné à enrouler le ruban pour former une bobine de manière à faciliter son stockage.

Le procédé de fabrication du ruban selon l'invention va à présent être décrit. L'exemple donné ci-après réalise un ruban composite de verre et de polyéthylène, de largeur 90 mm et d'épaisseur 0,2 mm, son taux de vide étant inférieur à 0,2%.

La mise en route du procédé s'effectue d'abord en tirant et en amenant manuellement chaque fil 11 des bobines 2 jusqu'au banc de tirage 130 où chaque fil est alors maintenu pincé, l'ensemble des fils passant au travers des divers dispositifs décrits plus haut. Il s'agit dans cet exemple d'application de 28 rovings de fil composite comêlé verre-polyéthylène de marque *Twintex®* dont le titre global 982 tex comprend 60% de verre en poids.

Les fours 70 et 90 ainsi que les éléments chauffants du dispositif 1 sont montés en température pour atteindre les températures suivantes :
- four 70 : 370°C ;
- four 90 : 280°C ;
- cylindres tournants du dispositif imprégnation 80 : 290°C ;
- galets du dispositif de conformation et de centrage 100 : 270°C.

Le banc de tirage 130 est mis en fonctionnement, le dévidage des bobines 2 commence.

Les fils 11 passent au travers des oeillets 31, puis à cheval des barreaux dans le dispositif 40, et sont rassemblés au travers des dents du peigne 50 pour formeren sortie la nappe 12 de fils parallèles.

La nappe 12 rencontre alors le dispositif 60 qui élimine toute électricité statique.

Elle rentre ensuite dans le premier four 70 de façon que la matière thermoplastique atteigne sa température de fusion. En sortie, elle passe entre les cylindres chauffants du dispositif 80 qui permettent de la laminer en chassant l'air, et de répartir uniformément la matière thermoplastique qui enrobe ainsi les filaments de verre. Remarquons que la quantité de matière thermoplastique n'est pas à doser puisque celle-ci est directement intégrée à la matière première du ruban par son comêlage avec les filaments de verre. La température de la nappe atteint après le passage dans ce dispositif 80 une température de 190°C.

Puis la nappe 12 traverse le second four 90.pour maintenir dans un état malléable la matière thermoplastique afin qu'en sortie, elle défile entre les galets 101, 102 du dispositif de conformation et de centrage 100 pour la transformer en un ruban 13, conformé en resserrant les fils les uns contre les autres et en les disposant de manière contiguë. Après conformation, le ruban présente une température de 210°C.

Le ruban 13 passe ensuite entre les cylindres 111 de la calandre froide 110 pour lui donner sa forme définitive en figeant la matière thermoplastique et en solidarisant les fils entre eux. On obtient le ruban 10 de l'invention d'épaisseur constante et d'aspect lisse. Le ruban présente une température de 100°C en sortie de calandre.

Pour faciliter et accélérer le refroidissement de l'ensemble du ruban 10, celui-ci est immergé dans le bain d'eau 120 et devient en sortie, sa température étant de 30°C, un produit solide et suffisamment souple pour être enroulé au moyen d'un bobinoir 140 sous forme d'une bobine pour des facilités de stockage, de transport et d'utilisation.

## Revendications

1. Procédé de fabrication d'un ruban composite (10) à base de fibres de renforcement et de matière organique thermoplastique, consistant à rassembler et à solidariser entre eux une multiplicité de fils continus (11) **caractérisé en ce que**:
- on entraîne et on rassemble de manière parallèle des fils (11) à base de matière thermoplastique et de fibres de renforcement, sous la forme d'une nappe (12);
- on fait pénétrer ladite nappe (12) dans une zone où elle est chauffée à une température atteignant au moins celle de fusion de la matière thermoplastique sans atteindre la température de ramolissement des fibres de renforcement;
- on fait passer la nappe (12) dans un dispositif tournant d'imprégnation (80), tout en maintenant sa température à une température de malléabilité de la matière thermoplastique, pour répartir de manière homogène la matière thermoplastique fondue et garantir la totale imprégnation des fibres de renforcement par celle-ci;
- on introduit la nappe (12) dans un dispositif de conformation et de centrage (100), tout en maintenant sa température à une température de malléabilité de la matière thermoplastique, de manière à obtenir un ruban (13) constitué par le rapprochement en contigu des fils (11) formant une continuité transversale;
- on refroidit le ruban (13) pour solidariser les fils entre eux en figeant la matière thermoplastique et on fixe ses caractéristiques dimensionnelles et son aspect pour délivrer ledit ruban composite (10).

2. Procédé selon la revendication 1, **caractérisé en ce que** les fils (11) qu'on rassemble consistent en des filaments continus de verre et de matière thermoplastique co-mêlés entre eux.

3. Procédé selon la revendication 1 ou 2, **caractérisé en ce qu'il** consiste à dévider des bobines d'un fil continu de filaments de renforcement et de matière thermoplastique, et lors du rassemblement des fils sous forme de nappe, à réguler la tension des fils.

4. Procédé selon l'une quelconque des revendications précédentes, **caractérisé en ce que** les fils (11) sont débarrassés de toute électricité statique avant le passage de la nappe (12) dans la zone de chauffage.

5. Procédé selon la revendication 1, **caractérisé en ce qu'**on introduit la nappe (12) dans une zone de chauffage supplémentaire après son passage dans le dispositif tournant d'imprégnation (80).

6. Procédé selon la revendication 1, caractérisé en qu'en fin de ligne de fabrication, le ruban (10) est enroulé sous forme de bobine pour son stockage.

7. Dispositif de mise en oeuvre du procédé selon l'une quelconque des revendications 1 à 6, **caractérisé en ce qu'**il comprend:
- des moyens (130) pour entraîner et des moyens (50) pour rassembler sous forme de nappe (12) les fils continus (11) constitués de filaments de renforcement et de matière thermoplastique;
- des moyens (70) pour chauffer ladite nappe (12) à une température atteignant au moins celle de fusion de la matière thermoplastique mais pas celle de ramolissement des filaments de renforcement;
- un dispositif tournant d'imprégnation (80) de la nappe chauffée de manière à répartir de manière homogène la matière thermoplastique fondue et à garantir la totale imprégnation des filaments de renforcement par celle-ci;
- un dispositif de conformation et de centrage (100) de la nappe (12) de manière à la transformer en un ruban (13);
- une calandre de refroidissement (110) du ruban (13) permettant de figer la matière thermoplastique et de solidariser les fils (11) entre eux et former le ruban définitif (10).

8. Dispositif selon la revendication 7, **caractérisé en ce qu'**il comprend des moyens supplémentaires de chauffage (90) de manière à garder malléable la matière thermoplastique de la nappe (12) après le passage de celle-ci dans le dispositif d'imprégnation (80).

9. Dispositif selon les revendications 7 et 8, **caractérisé en ce que** les deux moyens de chauffage (70, 90) sont des fours.

10. Dispositif selon la revendication 7, **caractérisé en ce que** les moyens de rassemblement (50) consistent en un peigne dont les dents (51) permettent un alignement parallèle des fils (11) selon des espaces réguliers.

11. Dispositif selon la revendication 7, **caractérisé en ce que** le dispositif d'imprégnation (80) comporte trois cylindres (81) chauffants et tournants qui sont disposés en triangle et entre lesquels défile la nappe (12), la hauteur de séparation des cylindres étant adaptée pour établir une pression appropriée sur la surface de la nappe.

12. Dispositif selon la revendication 11, **caractérisé en ce que** chaque cylindre (81) comporte une lame (82) pour racler la matière thermoplastique fondue déposée sur le cylindre après passage de la nappe.

13. Dispositif selon la revendication 7, **caractérisé en ce que** le dispositif de conformation et de centrage (100) comporte un galet inférieur (101) et un galet supérieur (102) décalés l'un au-dessus de l'autre et tournant en sens opposés, le galet supérieur étant de forme hyperboloïde, la nappe (12) étant concentrée autour de l'axe central de défilement lors de son passage entre les deux galets pour délivrer un ruban (13) présentant une association contiguë des fils les uns contre les autres.

14. Dispositif selon la revendication 7, **caractérisé en ce que** la calandre de refroidissement (110) est constituée de deux cylindres tournants de refroidissement qui sont disposés l'un au-dessus de l'autre et entre lesquels défile le ruban (13), et qui sont dépourvus de bords de guidage, la calandre conférant sa forme définitive au ruban (10).

15. Dispositif selon la revendication 14, **caractérisé en ce que** la calandre de refroidissement (110) comporte en aval des cylindres un bain (120) dans lequel est immergé le ruban (10) en défilement.

16. Dispositif selon la revendication 7, **caractérisé en ce que** des moyens de régulation de tension (40) des fils (11) sont prévus en amont des moyens de rassemblement (50).

17. Dispositif selon la revendication 7, **caractérisé en ce qu'**un dispositif anti-statique est prévu en amont des moyens de chauffage (70).

18. Dispositif selon la revendication 7, **caractérisé en ce qu'**il comporte en fin de ligne de fabrication et en aval des moyens d'entraînement (130) un bobinoir (140) permettant d'enrouler le ruban (10) sous forme de bobine.

19. Ruban obtenu selon le procédé de la revendication 1, **caractérisé en ce qu'**il constitue un produit solide et souple, d'aspect surfacique lisse, présentant une épaisseur inférieure à 0,2 mm et comprenant un taux de vide inférieur à 0,2%.

## Patentansprüche

1. Verfahren zur Herstellung eines Verbundbandes (10) auf der Basis von Verstärkungsfasern und thermoplastischem organischem Material, das darin besteht, eine Vielzahl von Endlosfäden (11) zu vereinigen und fest miteinander zu verbinden, **dadurch gekennzeichnet, dass**
- Fäden (11) auf der Basis des thermoplastischen Materials und der Verstärkungsfasern zur Form einer Bahn (12) parallel vorwärtsbewegt und vereinigt werden,
- die Bahn (12) in eine Zone, worin sie auf eine Temperatur erwärmt wird, die mindestens die Schmelztemperatur des thermoplastischen Materials erreicht, ohne die Erweichungstemperatur der Verstärkungsfasern zu erreichen,
- die Bahn (12) in eine sich drehende Imprägniereinrichtung (80), wobei ihre Temperatur auf derjenigen der Formbarkeit des thermoplastischen Materials gehalten wird, um das geschmolzene thermoplastische Material gleichmäßig zu verteilen und die vollständige Imprägnierung der Verstärkungsfasern mit ihm zu gewährleisten, und
- die Bahn (12) in eine formgebende und zentrierende Einrichtung (100), wobei ihre Temperatur auf derjenigen der Formbarkeit des thermoplastischen Materials derart gehalten wird, dass ein Band (13) erhalten wird, das durch sich berührende Annäherung der eine transversale Kontinuität bildenden Fäden (11) geformt wird, geschickt wird und
- das Band (13) abgekühlt wird, um die Fäden, indem das thermoplastische Material erstarren gelassen wird, fest miteinander zu verbinden, und seine Formeigenschaften und sein Aussehen fixiert werden, um das Verbundband (10) zu ergeben.

2. Verfahren nach Anspruch 1, **dadurch gekennzeichnet, dass** die Fäden (11), die vereinigt werden, aus cogesponnenen Filamenten aus Glas und aus thermoplastischem Material bestehen.

3. Verfahren nach Anspruch 1 oder 2, **dadurch gekennzeichnet, dass** es darin besteht, einen Endlosfaden aus Verstärkungsfilamenten und aus Filamenten aus thermoplastischem Material von Spulen abzuwickeln und während der Vereinigung der Fäden zur Form einer Bahn die Spannung der Fäden zu regeln.

4. Verfahren nach einem der vorhergehenden Ansprüche, **dadurch gekennzeichnet, dass,** bevor die Bahn (12) in die Erwärmungszone gelangt, die statische Elektrizität der Fäden (11) entladen wird.

5. Verfahren nach Anspruch 1, **dadurch gekennzeichnet, dass** die Bahn (12) nach dem Durchlauf durch die sich drehende Imprägniereinrichtung (80) in eine zusätzliche Erwärmungszone geschickt wird.

6. Verfahren nach Anspruch 1, **dadurch gekennzeichnet, dass** das Band (10), um es lagern zu können, am Ende der Produktionslinie zur Form einer Rolle aufgewickelt wird.

7. Vorrichtung zur Durchführung des Verfahrens nach einem der Ansprüche 1 bis 6, **dadurch gekennzeichnet, dass** sie
- Mittel (130), um die aus Verstärkungsfilamenten und Filamenten aus thermoplastischem Material bestehenden Endlosfäden (11) vorwärtszubewegen, und Mittel (50), um sie zur Form einer Bahn (12) zu vereinigen,
- Mittel (70), um die Bahn (12) auf eine Temperatur zu erwärmen, die mindestens die Schmelztemperatur des thermoplastischen Materials, aber nicht die Erweichungstemperatur der Verstärkungsfilamente erreicht,
- eine sich drehende Einrichtung (80) zur derartigen Imprägnierung der erwärmten Bahn, dass das geschmolzene thermoplastische Material gleichmäßig verteilt und die vollständige Imprägnierung der Verstärkungsfilamente mit ihm gewährleistet wird,
- eine Einrichtung (100), welche die Bahn (12) derart formt und zentriert, dass diese in ein Band (13) umgewandelt wird, und
- einen Kalander (110) zum Abkühlen des Bandes (13), der es ermöglicht, das thermoplastische Material erstarren zu lassen, die Fäden (11) fest miteinander zu verbinden und das fertige Band (10) zu bilden,
umfasst.

8. Vorrichtung nach Anspruch 7, **dadurch gekennzeichnet, dass** sie zusätzliche Mittel (90) umfasst, die derart erwärmen, dass das thermoplastische Material der Bahn (12) nach deren Durchlauf durch die Imprägniereinrichtung (80) formbar bleibt.

9. Vorrichtung nach den Ansprüchen 7 und 8, **dadurch gekennzeichnet, dass** die zwei Erwärmungsmittel (70, 90) Öfen sind.

10. Vorrichtung nach Anspruch 7, **dadurch gekennzeichnet, dass** die Vereinigungsmittel (50) aus einem Kamm bestehen, dessen Zähne (51) eine parallele Ausrichtung der Fäden (11) in regelmäßigen Abständen ermöglichen.

11. Vorrichtung nach Anspruch 7, **dadurch gekennzeichnet, dass** die Imprägniereinrichtung (80) drei sich drehende, beheizbare Zylinder (81) enthält, die in einem Dreieck angeordnet sind und zwischen welchen die Bahn (12) durchläuft, wobei die Höhe des Abstands der Zylinder eingestellt wird, um den richtigen Druck auf die Oberfläche der Bahn zu erzeugen.

12. Vorrichtung nach Anspruch 11, **dadurch gekennzeichnet, dass** die Zylinder (81) jeweils eine Klinge (82) umfassen, um nach dem Durchlauf der Bahn auf dem Zylinder zurückgebliebenes geschmolzenes thermoplastisches Material abzustreifen.

13. Vorrichtung nach Anspruch 7, **dadurch gekennzeichnet, dass** die Formgebungs- und Zentriereinrichtung (100) eine untere Rolle (101) und eine obere Rolle (102) enthält, die übereinander versetzt sind und sich in entgegengesetzter Richtung drehen, wobei die obere Rolle eine hyperboloide Form hat und die Bahn (12) während ihres Durchlaufs durch die beiden Rollen um die zentrale Durchlaufachse konzentriert wird, um ein Band (13) zu ergeben, das eine einander berührende Verbindung der Fäden aufweist.

14. Vorrichtung nach Anspruch 7, **dadurch gekennzeichnet, dass** der Kühlkalander (110) aus zwei sich drehenden Kühlzylindern besteht, die übereinander angeordnet sind, zwischen denen das Band (13) durchläuft und welche keine Führungsränder haben, wobei der Kalander dem Band (10) dessen endgültige Form verleiht.

15. Vorrichtung nach Anspruch 14, **dadurch gekennzeichnet, dass** der Kühlkalander (110) nach den Zylindern ein Bad (120) umfasst, in welches das durchlaufende Band (10) eintaucht.

16. Vorrichtung nach Anspruch 7, **dadurch gekennzeichnet, dass** vor den Vereinigungsmitteln (50) Mittel (40) zur Regelung der Spannung der Fäden (11) vorgesehen sind.

17. Vorrichtung nach Anspruch 7, **dadurch gekennzeichnet, dass** vor den Erwärmungsmitteln (70) eine antistatische Einrichtung vorgesehen ist.

18. Vorrichtung nach Anspruch 7, **dadurch gekennzeichnet, dass** sie am Ende der Produktionslinie und nach den Antriebsmitteln (130) eine Wickelmaschine (140) umfasst, die es ermöglicht, das Band (10) zu einer Rolle aufzuwickeln.

19. Band, das gemäß dem Verfahren nach Anspruch 1 erhalten worden ist, **dadurch gekennzeichnet, dass** es aus einem nachgiebigen, festen Produkt besteht, dessen Oberfläche glatt aussieht, und welches eine Dicke von unter 0,2 mm und einen Hohlraumanteil von unter 0,2 % aufweist.

## Claims

1. Method for the manufacture of a composite ribbon (10) based on thermoplastic organic material reinforcing fibres, consisting of assembling and joining together a plurality of continuous threads (11), **characterized in that** in parallel manner, threads (11) based on thermoplastic material, reinforcing fibres are entrained and assembled in the form of a sheet (12), said sheet (12) is introduced into an area where it is heated to a temperature which at least reaches the melting point of the thermoplastic material, but without reaching the softening temperature of the reinforcing fibres, the sheet (12) is passed into a rotary impregnating device (80), whilst keeping it at the malleability temperature of the thermoplastic material in order to homogeneously distribute the melted thermoplastic material and ensure the total impregnation of the reinforcing fibres by the same, the sheet (12) is introduced into a shaping and centring device (100), whilst maintaining it at the malleability temperature of the thermoplastic material so as to obtain a ribbon (13) formed by contiguously approaching threads (11) forming a transverse continuity, and the ribbon (13) is cooled in order to join together the threads when the thermoplastic material solidifies and the dimensional characteristics and appearance thereof are fixed in order to provide said composite ribbon (10).

2. Method according to claim 1, **characterized in that** the assembled threads (11) are constituted by continuous glass and thermoplastic material filaments, which are co-mingled.

3. Method according to claim 1 or 2, **characterized in that** it consists of unwinding from reels a continuous thread of thermoplastic material, reinforcing filaments and, during the assembly of the threads in the form of a sheet, regulating the tension of the threads.

4. Method according to any one of the preceding claims, **characterized in that** the threads (11) are freed from any static electricity prior to the passage of the sheet (12) into the heating area.

5. Method according to claim 1, **characterized in that** the sheet (12) is introduced into a supplementary heating area following its passage into the rotary impregnating device (80).

6. Method according to claim 1, **characterized in that** at the end of the production line, the ribbon (10) is wound in reel form for its storage.

7. Apparatus for implementing the method according to any one of the claims 1 to 6, **characterized in that** it comprises means for entraining (130) and means (50) for assembling in the form of a sheet (12) the continuous threads (11) constituted by thermoplastic, reinforcing filaments, means (70) for heating said sheet (12) to a temperature at least reaching that of the melting point of the thermoplastic material, but not reaching the softening point of the reinforcing filaments, a rotary device (80) for impregnating the heated sheet so as to homogeneously distribute the melted thermoplastic material and for ensuring the total impregnation of the reinforcing filaments by the same, a device for shaping and centring (100) the sheet (12) so as to transform it into a ribbon (13), a calender (110) for cooling the ribbon (13) so as to solidify the thermoplastic material and join together the threads (11) so as to form the final ribbon (10).

8. Apparatus according to claim 7, **characterized in that** it comprises supplementary heating means (90) in order to keep malleable the thermoplastic material of the sheet (12) following the passage of the latter into the impregnating device (80).

9. Apparatus according to claims 7 and 8, **characterized in that** the two heating means (70, 90) are ovens.

10. Apparatus according to claim 7, **characterized in that** the assembly means (50) are constituted by a comb, whose teeth (51) permit a parallel alignment of the threads (11) with regular spacings.

11. Apparatus according to claim 7, **characterized in that** the impregnating device (80) has three rotary heating cylinders (81) arranged in the form of a triangle and between which moves the sheet (12), the separating height of the cylinders being adapted in order to establish an appropriate pressure on the sheet surface.

12. Apparatus according to claim 11, **characterized in that** each cylinder (81) has a blade (82) for scraping the melted thermoplastics material deposited on the cylinder following the passage of the sheet.

13. Apparatus according to claim 7, **characterized in that** the shaping and centring device (100) has a lower roller (101) and an upper roller (102) offset in superimposed manner and rotating in opposite directions, the upper roller having a hyperboloid shape, the sheet (12) being concentrated around the central displacement axis during its passage between the two rollers in order to provide a ribbon (13) having a contiguous combination of the threads against one another.

14. Apparatus according to claim 7, **characterized in that** the cooling calender (110) is constituted by two rotary cooling cylinders arranged in superimposed manner and between which passes the ribbon (13) and which do not have guide edges, the calender giving the ribbon (10) its final shape.

15. Apparatus according to claim 14, **characterized in that** the cooling calender (110) has, downstream of the cylinders, a bath (120) in which is immersed the moving ribbon (10).

16. Apparatus according to claim 7, **characterized in that** means (40) for regulating the tension of the threads (11) are provided upstream of the assembly means (50).

17. Apparatus according to claim 7, **characterized in that** an antistatic device is provided upstream of the heating means (70).

18. Apparatus according to claim 7, **characterized in that** at the end of the production line and downstream of the displacement means (130), it has a winder (140) making it possible to wind the ribbon (10) in reel form.

19. Ribbon obtained according to the method of claim 1, **characterized in that** it constitutes a solid, flexible product with a smooth surface appearance, having a thickness below 0.2 mm and an emptiness level below 0.2%.
